# EUROPEAN PATENT APPLICATION

(11) **EP 3 128 714 A1**
(43) Date of publication of application: **08.02.2017**
(21) Application number: 14889513.9
(22) Date of filing: 17.04.2014
(51) Int. Cl.: H04L 29/08

(54) **DATA PROCESSING METHOD, CONTROL METHOD AND APPARATUSES**

(71) Applicant: Huawei Technologies Co., Ltd., Shenzhen, Guangdong 518129 (CN)
(72) Inventor: ZHANG, Wei, Shenzhen Guangdong 518129 (CN); PENG, Chenghui, Shenzhen Guangdong 518129 (CN); ZHANG, Jinfang, Shenzhen Guangdong 518129 (CN)
(74) Representative: Thun, Clemens
(86) International application number: PCT/CN2014/075644
(87) International publication number: WO 2015/157982

(57) **Abstract**

The present invention provides a data processing method and apparatus, and a control method and apparatus, so as to resolve a technical problem that a data processing manner existing in the prior art cannot meet a requirement of a new processing procedure. A data processing apparatus may determine a specific processing action sequence for communication data according to a filter template sent by a control apparatus and a feature of the communication data. Therefore, for different communication data, the data processing apparatus can determine different processing action sequences. In addition, when a new service emerges and a new data processing procedure is required, because the data processing apparatus and the control apparatus are separate from each other, only the control apparatus needs to be adjusted and the data processing apparatus does not need to be adjusted. In this way, complexity of the data processing apparatus is controlled to a specific extent and flexibility of the data processing apparatus is significantly increased, which can meet a requirement for massive connections of multiple services in a future network.

## Description

### TECHNICAL FIELD

The present invention relates to the communications field, and in particular, to a data processing method and apparatus, and a control method and apparatus.

### BACKGROUND

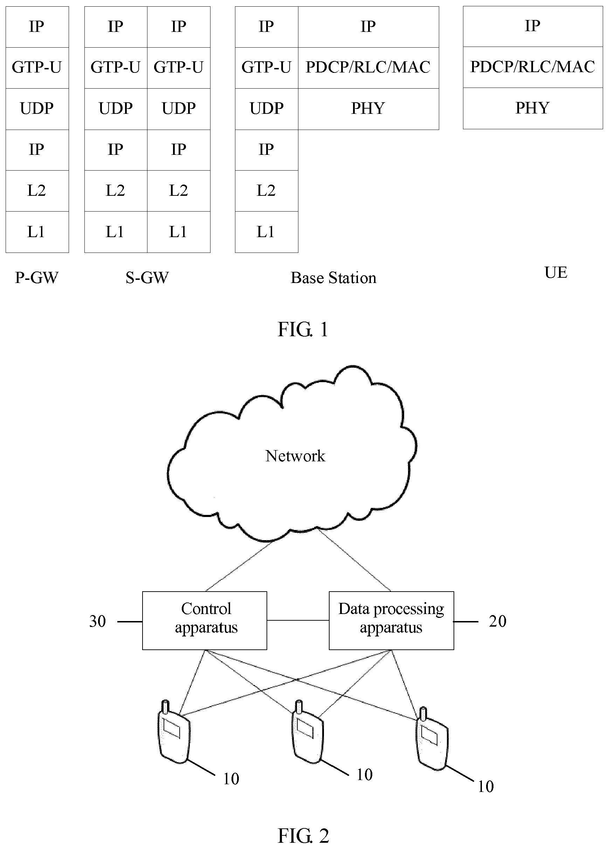

In an existing network, an architecture and a function of the network are relatively fixed, such as a 3G (3rd Generation, 3rd generation mobile communications network) network or an LTE (Long Term Evolution, Long Term Evolution) network. A protocol of the network defines a set of standard data processing processes in which all data is processed in this standard manner, and a description of a protocol stack is shown in FIG. 1. Downlink data is used as an example in which user data enters an operator network from an external network through a PGW (Packet Gateway, packet gateway). In the operator network, the PGW performs encapsulation on the user data according to a location, stored in the PGW, of an SGW (Service Gateway, serving gateway) in which a user is located, and then sends the encapsulated data to the SGW After decapsulating the received data, the SGW processes the user data layer by layer strictly according to the protocol stack shown in FIG. 1 and encapsulates the user data, and sends the data to a corresponding base station. After decapsulating the received data, the base station performs air interface processing on the data and then sends the data to the user.

However, with continuous emerging of new services, requirements of new processing procedures are increasing. Continuous expansion leads to increasing complexity of a network device of existing design, and costs of development and maintenance increase gradually. An existing data processing method cannot meet the requirements of the new processing procedures, which hinders development of the new services.

### SUMMARY

The present invention provides a data processing method and apparatus, and a control method and apparatus, so as to resolve a technical problem that a data processing manner available in the prior art cannot meet a requirement of a new processing procedure.

According to a first aspect, the present invention provides a data processing apparatus in an embodiment of this application, where the data processing apparatus and a control apparatus are separate and communicatively connected to each other, and the control apparatus controls the data processing apparatus to process communication data, where the data processing apparatus includes: a receiving unit, configured to receive the communication data; a determining unit, configured to determine, according to a filter template sent by the control apparatus and a feature of the communication data, a processing action sequence corresponding to the communication data; and a processing unit, configured to process the communication data by using the processing action sequence.

With reference to the first aspect, in a first possible implementation manner, the determining unit specifically includes: a data feature matching unit, configured to perform matching between the feature of the communication data and the filter template; and a processing action sequence determining unit, configured to: when the feature of the data matches the filter template, determine a processing action sequence corresponding to the filter template as the processing action sequence corresponding to the communication data.

With reference to the first aspect or the first possible implementation manner, in a second possible implementation manner, the apparatus further includes: a processing action sequence forming unit, configured to: receive a control instruction from the control apparatus before the data processing apparatus receives an initial packet of the communication data; and execute the control instruction to adjust a standard processing action sequence, so as to form the processing action sequence corresponding to the filter template.

With reference to any one of the first aspect, the first possible implementation manner, or the second possible implementation manner, in a third possible implementation manner, the processing action sequence is specifically a sorted set of processing actions of a protocol stack for processing the communication data, and the processing unit can sequentially process the communication data according to a sequence of the processing actions in the sorted set.

According to a second aspect, the present invention provides a control apparatus in an embodiment of this application, where the control apparatus and a data processing apparatus are separate and communicatively connected to each other, and the control apparatus controls the data processing apparatus to process communication data, where the control apparatus includes: a determining unit, configured to determine a filter template corresponding to a data packet type of the communication data; and a sending unit, configured to send the filter template to the data processing apparatus, so that the data processing apparatus determines, according to the filter template and a feature of the communication data, a processing action sequence corresponding to the communication data.

With reference to the second aspect, in a first possible implementation manner, the apparatus further includes: a control instruction generating unit, configured to: after the determining unit determines the filter template corresponding to the data packet type of the communication data, generate a control instruction corresponding to the filter template; and a control instruction sending unit, configured to send the control instruction to the data processing apparatus, so that the data processing apparatus executes the control instruction to adjust a standard processing action sequence, so as to form a processing action sequence corresponding to the filter template.

With reference to the first possible implementation manner, in a second possible implementation manner, the control instruction generation unit specifically includes: a processing action sequence determining unit, configured to determine, according to the filter template, the processing action sequence corresponding to the filter template; and a control instruction generating subunit, configured to generate the control instruction according to the processing action sequence corresponding to the filter template.

With reference to any one of the second aspect, the first possible implementation manner, or the second possible implementation manner, in a third possible implementation manner, a granularity of the processing action sequence may be configured according to a user requirement.

According to a third aspect, the present invention provides a data processing method in an embodiment of this application, applied to a data processing apparatus, where the data processing apparatus and a control apparatus are separate and communicatively connected to each other, and the control apparatus controls the data processing apparatus to process communication data, where the method includes: receiving, by the data processing apparatus, the communication data; determining, by the data processing apparatus according to a filter template sent by the control apparatus and a feature of the communication data, a processing action sequence corresponding to the communication data; and processing, by the data processing apparatus, the communication data by using the processing action sequence.

With reference to the third aspect, in a first possible implementation manner, the determining, by the data processing apparatus according to a filter template sent by the control apparatus and a feature of the communication data, a processing action sequence corresponding to the communication data includes: performing, by the data processing apparatus, matching between the feature of the communication data and the filter template; and when the feature of the communication data matches the filter template, determining, by the data processing apparatus, a processing action sequence corresponding to the filter template as the processing action sequence corresponding to the data.

With reference to the third aspect or the first possible implementation manner, in a second possible implementation manner, before the data processing apparatus receives an initial packet of the communication data, the method further includes: receiving, by the data processing apparatus, a control instruction from the control apparatus; and executing, by the data processing apparatus, the control instruction to adjust a standard processing action sequence, so as to form the processing action sequence corresponding to the filter template.

With reference to any one of the third aspect, the first possible implementation manner, or the second possible implementation manner, in a third possible implementation manner, the processing action sequence is specifically a sorted set of processing actions of a protocol stack for processing the communication data, and the processing unit can sequentially process the communication data according to a sequence of the processing actions in the sorted set.

According to a fourth aspect, the present invention provides a control method in an embodiment of this application, applied to a control apparatus, where the control apparatus and a data processing apparatus are separate and communicatively connected to each other, and the control apparatus controls the data processing apparatus to process communication data, where the method includes: determining, by the control apparatus, a filter template corresponding to a data packet type of the communication data; and sending, by the control apparatus, the filter template to the data processing apparatus, so that the data processing apparatus determines, according to the filter template and a feature of the data, a processing action sequence corresponding to the data.

With reference to the fourth aspect, in a first possible implementation manner, after the determining, by the control apparatus, a filter template corresponding to a data packet type of the communication data, the method further includes: generating, by the control apparatus, a control instruction corresponding to the filter template; and sending, by the control apparatus, the control instruction to the data processing apparatus, so that the data processing apparatus executes the control instruction to adjust a standard processing action sequence, so as to form a processing action sequence corresponding to the filter template.

With reference to the first possible implementation manner, in a second possible implementation manner, the generating, by the control apparatus, a control instruction corresponding to the filter template includes: determining, by the control apparatus according to the filter template, the processing action sequence corresponding to the filter template; and generating, by the control apparatus, the control instruction according to the processing action sequence corresponding to the filter template.

With reference to any one of the second aspect, the first possible implementation manner, or the second possible implementation manner, in a third possible implementation manner, a granularity of the processing action sequence may be configured according to a user requirement.

Beneficial effects of the present invention are as follows:
After receiving communication data, a data processing apparatus determines, according to a filter template sent by a control apparatus and a feature of the communication data, a processing action sequence corresponding to the communication data, and then the data processing apparatus processes the communication data according to the determined processing action sequence. That is, the data processing apparatus determines the specific processing action sequence of the communication data according to the filter template sent by the control apparatus and the feature of the communication data. Therefore, for different communication data, the data processing apparatus can determine different processing action sequences. In addition, when a new service emerges and a new data processing procedure is required, because the data processing apparatus and the control apparatus are separate from each other, only the control apparatus needs to be adjusted and the data processing apparatus does not need to be adjusted. In this way, complexity of the data processing apparatus is controlled to a specific extent and flexibility of the data processing apparatus is significantly increased, which can meet a requirement for massive connections of multiple services in a future network.

### BRIEF DESCRIPTION OF DRAWINGS

FIG. 1 is a schematic diagram of a protocol stack in the prior art;
FIG. 2 is a system architecture diagram of a wireless communications system according to an embodiment of the present invention;
FIG. 3A is a schematic structural diagram of a data processing apparatus according to an embodiment of the present invention;
FIG. 3B is a schematic structural diagram of a control apparatus according to an embodiment of the present invention;
FIG. 4 is a diagram of a communication data processing procedure of a wireless communications system according to an embodiment of the present invention;
FIG. 5 is a functional block diagram of a data processing apparatus according to an embodiment of the present invention;
FIG. 6 is a functional block diagram of a control apparatus according to an embodiment of the present invention;
FIG. 7 is a flowchart of a data processing method according to an embodiment of the present invention; and
FIG. 8 is a flowchart of a control method according to an embodiment of the present invention.

### DESCRIPTION OF EMBODIMENTS

Embodiments of this application provide a data processing method and apparatus, and a control method and apparatus, so as to resolve a technical problem that a data processing manner existing in the prior art cannot meet a requirement of a new processing procedure.

The following describes technical solutions of the present invention in detail by using accompanying drawings and specific embodiments. It should be understood that the embodiments of the present invention and specific features in the embodiments are intended to describe the technical solutions of the present invention in detail rather than limit the technical solutions of the present invention. In the case of no conflict, the embodiments of the present invention and the technical features in the embodiments may be mutually combined.

### Embodiment 1

This embodiment provides a wireless communications system. Referring to FIG. 2, FIG. 2 is a system architecture diagram of the wireless communications system. The wireless communications system includes user equipment 10, a data processing apparatus 20, and a control apparatus 30. The data processing apparatus 20 and the control apparatus 30 are separate and communicatively connected to each other, where the control apparatus 30 controls the data processing apparatus 20 to process communication data. The foregoing separation may be physical separation, or may be logical separation between virtual devices.

The user equipment 10 may be, for example, a cellular phone, a smartphone, a portable computer, a handheld communications device, a handheld computing device, a satellite radio apparatus, a global positioning system, a PDA, a vehicle-mounted terminal, a wearable terminal, and/or any other terminal device configured to perform communication in the wireless communications system.

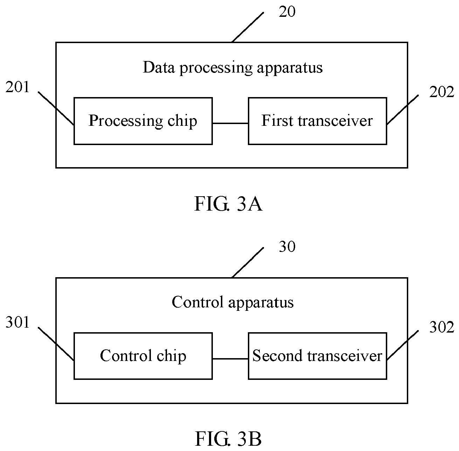

The data processing apparatus 20, as shown in FIG. 3A, may include at least a processing chip 201 that has data processing logic. The control apparatus 30, as shown in FIG. 3B, may include at least a control chip 301 that has control logic. The foregoing chip may be one of an NVRAM nonvolatile memory, a DRAM dynamic random access memory, an SRAM static random access memory, a Flash flash memory, or the like.

The data processing apparatus 20 may further include a first transceiver 202, which is connected to the foregoing processing chip 201, and the apparatus is configured to receive or send uplink/downlink communication data and further configured to receive a control instruction and a filter (Filter) template sent by the control apparatus 30.

The control apparatus 30 may further include a second transceiver 302, which is connected to the foregoing control chip 301, and the apparatus is configured to receive uplink/downlink communication data and further configured to send the control instruction and the filter template to the data processing apparatus 20.

In a practical application, the data processing apparatus 20 and the control apparatus 30 may be disposed on one or more network side devices. An LTE network is used as an example in which the data processing apparatus 20 and the control apparatus 30 may be jointly disposed on one base station or gateway, or may be respectively disposed on multiple base stations or gateways. For a UMTS (Universal Mobile Telecommunications System, Universal Mobile Telecommunications System) network, the control apparatus 30 may be disposed on an RNC (Radio Network Controller, radio network controller), and a data processor 20 may be disposed on a base station or gateway. Certainly, for a wireless communications network of a different architecture, the data processing apparatus 20 and the control apparatus 30 may further be disposed in another manner, which may be designed by a person skilled in the art and is not specifically limited in this application.

The following describes a specific communication data processing procedure of the foregoing wireless communications system in detail.

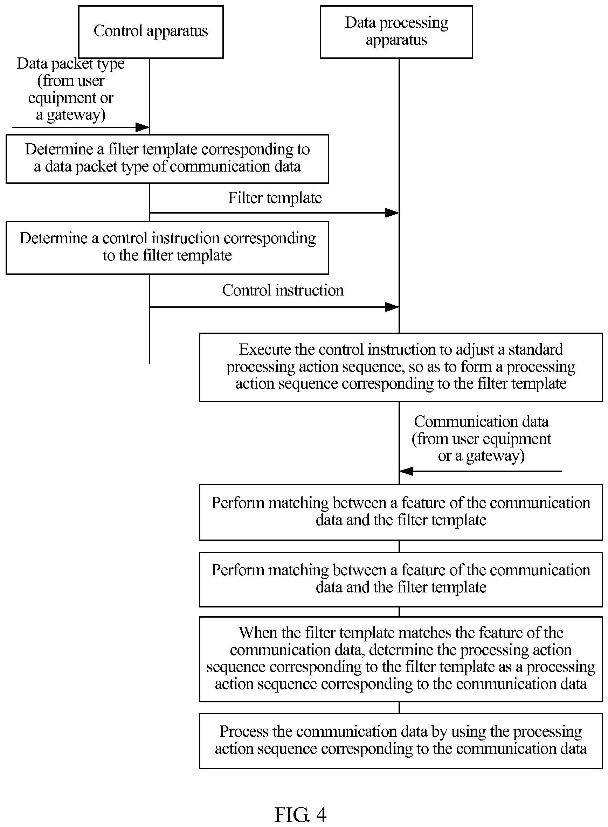

Referring to FIG. 2 and FIG. 4, FIG. 4 is a diagram of a communication data processing procedure of a wireless communications system.

First, the control apparatus 30 determines a data packet type of communication data.

In a practical application, for uplink communication data, before the user equipment 10 sends an uplink communication data stream to the data processing apparatus 20, or for downlink communication data, before a gateway sends an uplink communication data stream to the data processing apparatus 20, the user equipment 10 or the gateway first performs signaling interaction with the control apparatus 30, so as to inform the control apparatus 30 of the data packet type of the communication data that needs to be sent next, such as an IP data packet, an IP data packet carrying an internal tunnel bearer, or an air interface bearer data packet.

Then, the control apparatus 30 determines a filter template corresponding to the data packet type of the communication data.

In a specific implementation process, a mapping relationship between the data packet type and the filter template is pre-stored in the control apparatus 30; therefore, after determining the data packet type of the communication data, the control apparatus 30 may determine the corresponding filter template according to the mapping relationship.

In the specific implementation process, the mapping relationship between the data packet type and the filter template may be stored inside the control apparatus 30 in a tabular form, or the foregoing mapping relationship may be saved by using a database.

Further, a mapping relationship between the filter template and a processing action sequence may also be pre-stored in the control apparatus 30; therefore, after determining the filter template corresponding to the data packet type, the control apparatus 30 may also determine a corresponding processing action sequence by using the filter template. Then, a comparison is performed between the determined processing action sequence and a standard processing action sequence, and a different step is executed according to a comparison result.

When the foregoing comparison result indicates that the determined processing action sequence is the same as the standard processing action sequence, that is, when the foregoing comparison result indicates that the standard processing action sequence can process the communication data of the data packet type, the control apparatus 30 sends only the filter template to the data processing apparatus 20.

When the foregoing comparison result indicates that the determined processing action sequence is different from the standard processing action sequence, that is, when the foregoing comparison result indicates that the standard processing action sequence cannot process the communication data of the data packet type, the control apparatus 30 generates, according to a difference between the determined processing action sequence and the standard processing action sequence, a control instruction corresponding to the filter template. The control instruction may be an insertion instruction, a deletion instruction, an appending instruction, a replacement instruction, or the like. The control apparatus 30 may further send the control instruction to the data processing apparatus 20.

In the specific implementation process, because the standard processing action sequence is unchanged, a mapping relationship between the filter template and the control instruction may further be pre-stored in the control apparatus 30. In this case, the control apparatus 30 may determine the corresponding control instruction according to the determined filter template and the mapping relationship between the filter template and the control instruction, and subsequently send the control instruction to the data processing apparatus 20.

Certainly, if the communication data of the data packet type can be processed by using a standard data processing sequence, that is, the processing action sequence corresponding to the filter template is the same as the standard processing action sequence, mapping between the filter template and the control instruction does not exist.

It should be noted that, the processing action sequence mentioned in one or more embodiments of this application is specifically a sorted set of processing actions of a protocol stack for processing the communication data, and the communication data can be sequentially processed according to a sequence of the processing actions in the sorted set. The standard processing action sequence mentioned in the one or more embodiments of this application is specifically a sorted set of processing actions of a protocol stack in the prior art, such as a protocol stack used in an LTE network, as shown in FIG. 1.

Further, a granularity of the processing action sequence may be configured according to a user requirement. For example, according to the user requirement, a PDCP (Packet Data Convergence Protocol, Packet Data Convergence Protocol) action is split to form a processing action sequence of an action ROHC (Robust Header Compression, Robust Header Compression protocol), an action Security, an action RLC (Radio Link Control, Radio Link Control protocol), an action MAC (Media Address Acces, Medium Access Control protocol), and an action PHY (Physical, Physical layer protocol). For another example, RLCs are differentiated according to modes, so as to form a processing action sequence of an action ROHC, an action Security, an action RLC-AM (an RLC acknowledgment mode), an action MAC, and an action PHY.

If the data processing apparatus 20 receives only the filter template, the data processing apparatus 20 saves the filter template, and then waits to receive the communication data.

However, if the data processing apparatus 20 receives the filter template and the control instruction, the data processing apparatus 20 further needs to execute the control instruction to adjust the standard processing action sequence, so as to form the processing action sequence corresponding to the filter template.

Then, the data processing apparatus 20 starts to receive the communication data. From an initial packet of the received communication data, the data processing apparatus 20 parses each data packet, to obtain features of these data packets, that is, features of the communication data.

Then, the data processing apparatus 20 determines, according to the received filter template and the foregoing features of the communication data that are obtained by parsing, the processing action sequence corresponding to the communication data.

Specifically, the data processing apparatus 20 performs matching between the feature of each data packet and the filter template, and when the feature of the data packet matches the filter template, determines the processing action sequence corresponding to the filter template as the processing action sequence corresponding to the communication data. However, when the feature of the data packet does not match the filter template, the data processing apparatus adopts a default setting, that is, uses the standard processing action sequence as a data processing sequence corresponding to the data packet.

Finally, the data processing apparatus 20 uses the processing action sequence corresponding to the data packet to process each data packet in the communication data.

The following describes the foregoing one or more embodiments by using a specific example.

For example, the control apparatus 30 determines, by performing signaling interaction with the user equipment 10 or the gateway, that the data packet type of the communication data is an IP data packet.

Then, the control apparatus 30 determines a filter template corresponding to the IP data packet, that is, an IP quintet, by querying for the pre-stored mapping relationship between the data packet type and the filter template, as listed in Table 1 below.

**Table 1**

| **Data packet type** | **Filter template** |
|---|---|
| IP data packet | IP quintet |
| IP data packet carrying an internal tunnel bearer | IP quintet, MPLS label, VLAN label, transport tunnel identifier, bearer identifier |
| Air interface bearer data packet | LCID+user equipment identifier |

The MPLS (Multi-Protocol Label Switching) label is a multi-protocol switching label, and the VLAN (Virtual Local Area Network) label is a virtual local area network label, and the LCID (locale identifier) is a locale identifier.

Certainly, in actual application, for different data packet types, there are different filter templates, which may be set by a person skilled in the art as required and are not specifically limited in this application.

Further, the control apparatus 30 determines the corresponding control instruction according to the filter template, that is, the IP quintet. For example, the standard processing action sequence is: action A-action B-action C. That is, the data packet is first processed by using the action A, then processed by using the action B, and finally processed by using the action C. If a processing action sequence corresponding to the IP quintet is a processing action sequence ABSC, that is, action A-action B-action S-action C, the control apparatus 30 may determine a corresponding control instruction, that is, an insertion instruction for inserting the action S between the action B and the action C.

Then, the control apparatus 30 sends the IP quintet and the foregoing insertion instruction to the data processing apparatus 20.

The data processing apparatus 20 adjusts, according to the insertion instruction, the standard processing action sequence stored in the data processing apparatus 20, that is, inserts the action S between the action B and the action C, so as to form the foregoing processing action sequence corresponding to the IP quintet.

Then, the data processing apparatus 20 starts to receive the communication data, parses each data packet from an initial packet of the received communication data, and performs matching between the IP quintet and the feature of the data packet. When the IP quintet matches the feature of the data packet, the data processing apparatus 20 uses the processing action sequence ABSC as the processing action sequence corresponding to the data packet.

Finally, the data processing apparatus 20 processes the foregoing data packet according to the processing action sequence ABSC.

### Embodiment 2

Based on a same inventive concept, this embodiment provides a data processing apparatus, where the apparatus may be disposed on a network side device that executes data processing logic, such as a base station or gateway.

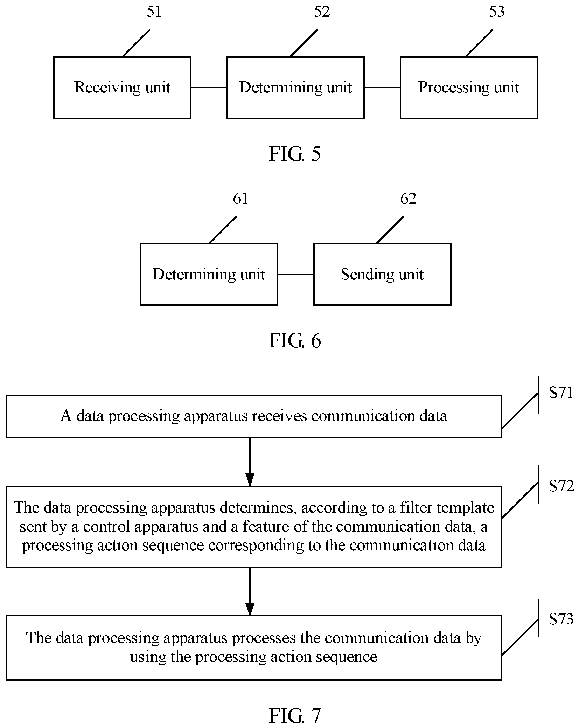

As shown in FIG. 5, FIG. 5 is a functional block diagram of a data processing apparatus. The data processing apparatus and a control apparatus are separate and communicatively connected to each other, where the control apparatus controls the data processing apparatus to process communication data. The data processing apparatus includes: a receiving unit 51, configured to receive the communication data; a determining unit 52, configured to determine, according to what the control apparatus sends and a feature of the communication data, a processing action sequence corresponding to the communication data; and a processing unit 53, configured to process the communication data by using the processing action sequence.

Optionally, the determining unit 51 specifically includes: a data feature matching unit, configured to perform matching between the feature of the communication data and the filter template; and a processing action sequence determining unit, configured to: when the feature of the data matches the filter template, determine a processing action sequence corresponding to the filter template as the processing action sequence corresponding to the communication data.

Optionally, the data processing apparatus further includes: a processing action sequence forming unit, configured to: receive a control instruction from the control apparatus before the data processing apparatus receives an initial packet of the communication data; and execute the control instruction to adjust a standard processing action sequence, so as to form the processing action sequence corresponding to the filter template.

It should be noted that, the processing action sequence mentioned herein is specifically a sorted set of processing actions of a protocol stack for processing the communication data, and the communication data can be sequentially processed according to a sequence of the processing actions in the sorted set. The standard processing action sequence is specifically a sorted set of processing actions of a protocol stack in the prior art, such as a protocol stack on an LTE network, as shown in FIG. 1.

### Embodiment 3

Based on a same inventive concept, this embodiment provides a control apparatus, where the control apparatus may be disposed on a network side device that executes control logic, such as an RNC, a base station, or a gateway.

As shown in FIG. 6, FIG. 6 is a functional block diagram of a control apparatus. The control apparatus and a data processing apparatus are separate and communicatively connected to each other, where the control apparatus controls the data processing apparatus to process communication data. The control apparatus includes: a determining unit 61, configured to determine a filter template corresponding to a data packet type of the communication data; and a sending unit 62, configured to send the filter template to the data processing apparatus, so that the data processing apparatus determines, according to the filter template and a feature of the communication data, a processing action sequence corresponding to the communication data.

Optionally, the control apparatus further includes: a control instruction generation unit, configured to: after the determining unit 61 determines the filter template corresponding to the data packet type of the communication data, generate a control instruction corresponding to the filter template; and a control instruction sending unit 62, configured to send the control instruction to the data processing apparatus, so that the data processing apparatus can execute the control instruction to adjust a standard processing action sequence, so as to form a processing action sequence corresponding to the filter template.

Optionally, the control instruction generation unit specifically includes: a processing action sequence determining unit, configured to determine, according to the filter template, the processing action sequence corresponding to the filter template; and a control instruction generating subunit, configured to generate the control instruction according to the processing action sequence corresponding to the filter template.

It should be noted that, a granularity of the processing action sequence in the foregoing one or more embodiments may be configured according to a user requirement. For example, according to the user requirement, a PDCP action is split to form a processing action sequence of an action ROHC, an action Security, an action RLC, an action MAC, and an action PHY. For another example, RLCs are differentiated according to modes, so as to form a processing action sequence of an action ROHC, an action Security, an action RLC-AM (an RLC acknowledgment mode), an action MAC, and an action PHY.

### Embodiment 4

Based on a same inventive concept, this embodiment provides a data processing method, applied to a data processing apparatus, where the data processing apparatus is the same as the data processing apparatus in the foregoing one or more embodiments, and may be separate from a control apparatus and communicatively connected to the control apparatus. The control apparatus controls the data processing apparatus to process communication data.

Referring to FIG. 7, the method includes:
S71. The data processing apparatus receives the communication data.
S72. The data processing apparatus determines, according to a filter template sent by the control apparatus and a feature of the communication data, a processing action sequence corresponding to the communication data.
S73. The data processing apparatus processes the communication data by using the processing action sequence.

In this embodiment, the control apparatus may send two types of messages to the data processing apparatus. A first type of message is the filter template corresponding to a data packet type, and the second type of message is the filter template corresponding to the data packet type and a control instruction corresponding to the filter template.

For the foregoing first type of message, the data processing apparatus considers a processing action sequence corresponding to the filter template as a standard processing action sequence.

For the foregoing second type of message, the data processing apparatus may further receive the control instruction from the control apparatus before executing S71, and execute the control instruction to adjust a standard processing action sequence, so as to form a processing action sequence corresponding to the filter template.

It should be noted that, the processing action sequence mentioned herein is specifically a sorted set of processing actions of a protocol stack for processing the communication data, and the communication data can be sequentially processed according to a sequence of the processing actions in the sorted set. The standard processing action sequence is specifically a sorted set of processing actions of a protocol stack in the prior art, such as a protocol stack used in an LTE network, as shown in FIG. 1.

Then, the data processing apparatus executes S71. That is, the data processing apparatus receives the communication data.

Then, S72 is executed. That is, the data processing apparatus determines, according to the filter template sent by the control apparatus and the feature of the communication data, the processing action sequence corresponding to the communication data.

Specifically, the data processing apparatus parses each data packet of the received communication data, to obtain a feature of the data packet, and then performs matching between the feature of the data packet and the filter template that is previously sent by the control apparatus. When the feature of the data packet matches the filter template, the data processing apparatus determines the processing action sequence corresponding to the filter template as the processing action sequence corresponding to the communication data. However, if the feature of the data packet does not match the filter template, the data processing apparatus adopts a default setting, that is, uses the standard processing action sequence as a processing action sequence corresponding to the data packet.

Finally, the data processing apparatus executes S73. That is, the data processing apparatus processes the communication data by using the processing action sequence. That is, the data processing apparatus processes the data packet according to a sequence of processing actions in the foregoing processing action sequence corresponding to the communication data.

### Embodiment 5

Based on a same inventive concept, this embodiment provides a control method, applied to a control apparatus, where the control apparatus is the same as the control apparatus in the foregoing one or more embodiments. The control apparatus and a data processing apparatus are separate and communicatively connected to each other, where the control apparatus controls the data processing apparatus to process communication data.

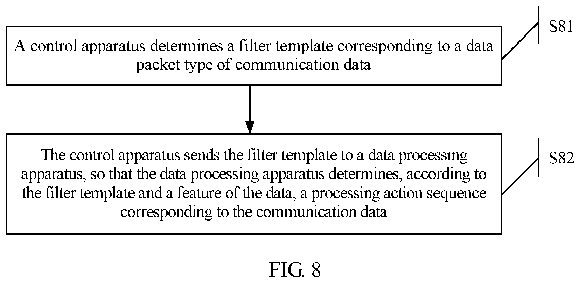

Referring to FIG. 8, the method includes:
S81. The control apparatus determines a filter template corresponding to a data packet type of the communication data.
S82. The control apparatus sends the filter template to the data processing apparatus, so that the data processing apparatus determines, according to the filter template and a feature of the data, a processing action sequence corresponding to the communication data.

In this embodiment, before user equipment or a gateway sends an uplink or a downlink data stream, the user equipment or the gateway needs to perform signaling interaction with the control apparatus, so as to inform the control apparatus of the data packet type in the data stream that needs to be received next by the data processing apparatus. After the control apparatus learns the data packet type of the communication data that needs to be received next, S81 is executed. That is, the control apparatus determines the filter template corresponding to the data packet type of the communication data.

Specifically, a mapping relationship between the data packet type and the filter template is pre-stored in the control apparatus; therefore, after determining the data packet type of the communication data, the control apparatus may determine the corresponding filter template according to the mapping relationship.

In a specific implementation process, the mapping relationship between the data packet type and the filter template may be stored inside the control apparatus in a tabular form, or the foregoing mapping relationship may be saved by using a database, which is not specifically limited in this application.

Further, a mapping relationship between the filter template and a processing action sequence may also be pre-stored in the control apparatus; therefore, after determining the filter template corresponding to the data packet type, the control apparatus may also determine a corresponding processing action sequence by using the filter template. Then, a comparison is performed between the determined processing action sequence and a standard processing action sequence, and a different step is executed according to a comparison result.
When the foregoing comparison result indicates that the determined processing action sequence is the same as the standard processing action sequence, that is, when the foregoing comparison result indicates that the standard processing action sequence can process the communication data of the data packet type, S82 is executed. That is, the control apparatus sends the filter template to the data processing apparatus, so that the data processing apparatus determines, according to the filter template and the feature of the data, the processing action sequence corresponding to the communication data.
When the foregoing comparison result indicates that the determined processing action sequence is different from the standard processing action sequence, that is, when the foregoing comparison result indicates that the standard processing action sequence cannot process the communication data of the data packet type, the control apparatus generates, according to a difference between the determined processing action sequence and the standard processing action sequence, a control instruction corresponding to the filter template. The control instruction may be an insertion instruction, a deletion instruction, an appending instruction, a replacement instruction, or the like. The control apparatus may further send the control instruction to the data processing apparatus.
In the specific implementation process, because the standard processing action sequence is unchanged, a mapping relationship between the filter template and the control instruction may further be pre-stored in the control apparatus. In this case, the control apparatus may determine the corresponding control instruction according to the determined filter template and the mapping relationship between the filter template and the control instruction, and subsequently send the control instruction to the data processing apparatus.
Certainly, if the communication data of the data packet type can be processed by using a standard data processing sequence, that is, the processing action sequence corresponding to the filter template is the same as the standard processing action sequence, mapping between the filter template and the control instruction does not exist.
It should be noted that, the processing action sequence mentioned in one or more embodiments of this application is specifically a sorted set of processing actions of a protocol stack for processing the communication data, and the communication data can be sequentially processed according to a sequence of the processing actions in the sorted set. The standard processing action sequence mentioned in the one or more embodiments of this application is specifically a sorted set of processing actions of a protocol stack in the prior art, such as a protocol stack on an LTE network, as shown in FIG. 1.
Further, a granularity of the processing action sequence may be configured according to a user requirement. For example, according to the user requirement, a PDCP action is split to form a processing action sequence of an action ROHC, an action Security, an action RLC, an action MAC, and an action PHY. For another example, RLCs are differentiated according to modes, so as to form a processing action sequence of an action ROHC, an action Security, an action RLC-AM, an action MAC, and an action PHY.
The technical solutions in the foregoing embodiments of this application have at least the following technical effects or advantages:
After receiving communication data, a data processing apparatus determines, according to a filter template sent by a control apparatus and a feature of the communication data, a processing action sequence corresponding to the communication data, and then the data processing apparatus processes the communication data according to the determined processing action sequence. That is, the data processing apparatus determines the specific processing action sequence of the communication data according to the filter template sent by the control apparatus and the feature of the communication data. Therefore, for different communication data, the data processing apparatus can determine different processing action sequences. In addition, when a new service emerges and a new data processing procedure is required, because the data processing apparatus and the control apparatus are separate from each other, only the control apparatus needs to be adjusted and the data processing apparatus does not need to be adjusted. In this way, complexity of the data processing apparatus is controlled to a specific extent and flexibility of the data processing apparatus is significantly increased, which can meet a requirement for massive connections of multiple services in a future network.
A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.
The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.
These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.
These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.
Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A data processing apparatus, wherein the data processing apparatus and a control apparatus are separate and communicatively connected to each other, and the control apparatus controls the data processing apparatus to process communication data, wherein the data processing apparatus comprises:
a receiving unit, configured to receive the communication data;
a determining unit, configured to determine, according to a filter template sent by the control apparatus and a feature of the communication data, a processing action sequence corresponding to the communication data; and
a processing unit, configured to process the communication data by using the processing action sequence.

2. The apparatus according to claim 1, wherein the determining unit specifically comprises:
a data feature matching unit, configured to perform matching between the feature of the communication data and the filter template; and
a processing action sequence determining unit, configured to: when the feature of the communication data matches the filter template, determine a processing action sequence corresponding to the filter template as the processing action sequence corresponding to the communication data.

3. The apparatus according to claim 1 or 2, wherein the apparatus further comprises:
a processing action sequence forming unit, configured to: receive a control instruction from the control apparatus before the data processing apparatus receives an initial packet of the communication data; and execute the control instruction to adjust a standard processing action sequence, so as to form the processing action sequence corresponding to the filter template.

4. The apparatus according to any one of claims 1 to 3, wherein the processing action sequence is specifically a sorted set of processing actions of a protocol stack for processing the communication data, and the processing unit can sequentially process the communication data according to a sequence of the processing actions in the sorted set.

5. A control apparatus, wherein the control apparatus and a data processing apparatus are separate and communicatively connected to each other, and the control apparatus controls the data processing apparatus to process communication data, wherein the control apparatus comprises:
a determining unit, configured to determine a filter template corresponding to a data packet type of the communication data; and
a sending unit, configured to send the filter template to the data processing apparatus, so that the data processing apparatus determines, according to the filter template and a feature of the communication data, a processing action sequence corresponding to the communication data.

6. The apparatus according to claim 5, wherein the apparatus further comprises:
a control instruction generation unit, configured to: after the determining unit determines the filter template corresponding to the data packet type of the communication data, generate a control instruction corresponding to the filter template; and
a control instruction sending unit, configured to send the control instruction to the data processing apparatus, so that the data processing apparatus executes the control instruction to adjust a standard processing action sequence, so as to form a processing action sequence corresponding to the filter template.

7. The apparatus according to claim 6, wherein the control instruction generation unit specifically comprises:
a processing action sequence determining unit, configured to determine, according to the filter template, the processing action sequence corresponding to the filter template; and
a control instruction generating subunit, configured to generate the control instruction according to the processing action sequence corresponding to the filter template.

8. The apparatus according to any one of claims 5 to 7, wherein a granularity of the processing action sequence may be configured according to a user requirement.

9. A data processing method, applied to a data processing apparatus, wherein the data processing apparatus and a control apparatus are separate and communicatively connected to each other, and the control apparatus controls the data processing apparatus to process communication data, wherein the method comprises:
receiving, by the data processing apparatus, the communication data;
determining, by the data processing apparatus according to a filter template sent by the control apparatus and a feature of the communication data, a processing action sequence corresponding to the communication data; and
processing, by the data processing apparatus, the communication data by using the processing action sequence.

10. The method according to claim 9, wherein the determining, by the data processing apparatus according to a filter template sent by the control apparatus and a feature of the communication data, a processing action sequence corresponding to the communication data comprises:
performing, by the data processing apparatus, matching between the feature of the communication data and the filter template; and
when the feature of the communication data matches the filter template, determining, by the data processing apparatus, a processing action sequence corresponding to the filter template as the processing action sequence corresponding to the data.

11. The method according to claim 9 or 10, wherein before the data processing apparatus receives an initial packet of the communication data, the method further comprises:
receiving, by the data processing apparatus, a control instruction from the control apparatus; and
executing, by the data processing apparatus, the control instruction to adjust a standard processing action sequence, so as to form the processing action sequence corresponding to the filter template.

12. The method according to any one of claims 9 to 11, wherein the processing action sequence is specifically a sorted set of processing actions of a protocol stack for processing the communication data, and the processing unit can sequentially process the communication data according to a sequence of the processing actions in the sorted set.

13. A control method, applied to a control apparatus, wherein the control apparatus and a data processing apparatus are separate and communicatively connected to each other, and the control apparatus controls the data processing apparatus to process communication data, wherein the method comprises:
determining, by the control apparatus, a filter template corresponding to a data packet type of the communication data; and
sending, by the control apparatus, the filter template to the data processing apparatus, so that the data processing apparatus determines, according to the filter template and a feature of the data, a processing action sequence corresponding to the data.

14. The method according to claim 13, wherein after the determining, by the control apparatus, a filter template corresponding to a data packet type of the communication data, the method further comprises:
generating, by the control apparatus, a control instruction corresponding to the filter template; and
sending, by the control apparatus, the control instruction to the data processing apparatus, so that the data processing apparatus executes the control instruction to adjust a standard processing action sequence, so as to form a processing action sequence corresponding to the filter template.

15. The method according to claim 14, wherein the generating, by the control apparatus, a control instruction corresponding to the filter template comprises:
determining, by the control apparatus according to the filter template, the processing action sequence corresponding to the filter template; and
generating, by the control apparatus, the control instruction according to the processing action sequence corresponding to the filter template.

16. The method according to any one of claims 13 to 15, wherein a granularity of the processing action sequence may be configured according to a user requirement.
